(19) Europäisches Patentamt
European Patent Office
Office européen des brevets

(11) **EP 2 864 686 B1**

(12) **EUROPÄISCHE PATENTSCHRIFT**

(45) Veröffentlichungstag und Bekanntmachung des Hinweises auf die Patenterteilung:
**25.05.2016  Patentblatt 2016/21**

(21) Anmeldenummer: **13730230.3**

(22) Anmeldetag: **18.06.2013**

(51) Int Cl.:
*F16L 37/091* *(2006.01)*    *F16L 37/098* *(2006.01)*
*F16L 37/086* *(2006.01)*    *F16L 47/24* *(2006.01)*
*F16L 21/035* *(2006.01)*

(86) Internationale Anmeldenummer:
**PCT/EP2013/062594**

(87) Internationale Veröffentlichungsnummer:
**WO 2014/001144 (03.01.2014 Gazette 2014/01)**

(54) **ANSCHLUSSVORRICHTUNG FÜR MEDIENLEITUNGEN**

CONNECTING DEVICE FOR MEDIA LINES

DISPOSITIF DE RACCORDEMENT POUR CONDUITES DE FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2012   DE 202012102342 U**
**18.09.2012   DE 102012108759**

(43) Veröffentlichungstag der Anmeldung:
**29.04.2015   Patentblatt 2015/18**

(73) Patentinhaber: **Voss Automotive GmbH**
**51688 Wipperfürth (DE)**

(72) Erfinder:
• **HAGEN, Harald**
**51688 Wipperfürth (DE)**
• **KLEHR, Adrian**
**58809 Neuenrade (DE)**

(74) Vertreter: **Patent- und Rechtsanwälte**
**Dr. Solf & Zapf**
**Schloßbleiche 20**
**42103 Wuppertal (DE)**

(56) Entgegenhaltungen:
**EP-A1- 0 340 518        WO-A1-2005/068892**
**DE-A1- 4 305 609        DE-A1- 4 308 526**
**DE-U1-202008 009 931    US-A- 4 471 978**
**US-A1- 2006 208 743**

EP 2 864 686 B1

**Beschreibung**

Die vorliegende Erfindung betrifft eine Anschlussvorrichtung für Medienleitungen gemäß dem Oberbegriff des Anspruchs 1.

Eine derartige Anschlussvorrichtung ist aus der DE 43 05 609 A1 bekannt. Bei dieser Anschlussvorrichtung weist der Einsteckansatz drei hintereinander liegende Abschnitte auf, wobei die Raststufe den in Einsteckrichtung hintersten Abschnitt bildet und somit hinter dem Dichtabschnitt liegt. Hierdurch ergibt sich eine relativ große Baulänge, so dass der Einbauraum entsprechend groß bemessen sein muss. Die große Baulänge ist auch deshalb erforderlich, um eine hinreichende Führung gegen Verkippen zu gewährleisten. Zudem ist es nachteilig, dass beim Einstecken die Dichtung des Dichtabschnitts die Rastnut des Aufnahmeteils passieren muss, wodurch es zu Beschädigungen an der Dichtung kommen kann.

Aus der Veröffentlichung EP 1 697 675 B1 ist eine Anschlussvorrichtung als Steckverbinder bekannt, wobei eine Medienleitung auf einfache und schnelle Weise lediglich in eine Steckaufnahme des Gehäuseteils eingesteckt zu werden braucht. Innerhalb der Steckaufnahme sind ein Halteelement zum mechanischen Arretieren der eingesteckten Leitung und eine Mediendichtung zum umfangsgemäßen Abdichten der Leitung angeordnet. Bei dieser bekannten Ausführung ist bezüglich der formschlüssigen Steckverbindung zwischen dem Kunststoff-Aufnahmeteil und dem Metall-Anschlussteil vorgesehen, dass das Aufnahmeteil formschlüssig rastend in das Anschlussteil eingreift. Eine dazu erforderliche innere nutartige Rastausnehmung des Metall-Anschlussteils ist mit einem recht hohen Fertigungsaufwand verbunden, weil eine spanende Bearbeitung im Innenbereich erforderlich ist. Zudem muss wegen der höheren Formsteifigkeit des Metall-Anschlussteils beim Steckfügevorgang das Kunststoff-Aufnahmeteil radial gestaucht werden, was nur in geringem Maße möglich ist und daher die radiale Überlappung der Wirkflächen der Rastung und damit auch die effektive Haltekraft der Rastverbindung begrenzt.

Es sind ferner auch ähnliche Ausführungen solcher Anschlussvorrichtungen bekannt, vergleiche dazu beispielsweise die Veröffentlichungen WO 2009/040 489 A1 und DE 10 2005 027 816 B4, bei denen das Anschlussteil mit einer äußeren umfangsgemäßen Schneidkante in das Aufnahmeteil eingreift. Die Schneidkante soll somit formschlüssig oder zumindest kraftformschlüssig in eine ursprünglich zylindrische Innenumfangsfläche des Aufnahmeteils einschneiden. Dadurch steht aber nachteiligerweise das Kunststoff-Aufnahmeteil dauerhaft unter einer radialen Vorspannung, was in Verbindung mit der durch die Schneidkante verursachten Kerbwirkung zu einer so genannten Spannungsrisskorrosion und dadurch zu Schäden oder sogar Ausfällen der Anschlussvorrichtung führen kann.

Der vorliegenden Erfindung liegt die Aufgabe zu Grunde, eine Anschlussvorrichtung der beschriebenen, gattungsgemäßen Art im Bereich der Steckverbindung zwischen dem Kunststoff-Aufnahmeteil und dem Metall-Anschlussteil so zu verbessern, dass eine erhöhte Betriebssicherheit und verbesserte Montage- und Anwendungseigenschaften erreicht werden.

Erfindungsgemäß wird dies durch die Merkmale des unabhängigen Anspruchs 1 erreicht. Vorteilhafte Ausgestaltungsmerkmale der Erfindung sind in den abhängigen Ansprüchen sowie auch in der anschließenden Beschreibung enthalten.

Demnach ist erfindungsgemäß vorgesehen, dass das Anschlussteil mit einem Einsteckansatz in eine Steckaufnahme des Aufnahmeteils eingesteckt ist, wobei der Einsteckansatz mit einer radial nach außen vorspringenden Raststufe eine radiale Hinterschneidungsfläche innerhalb der Steckaufnahme formschlüssig hintergreift. Durch diese Ausgestaltung werden wichtige Vorteile erreicht. So ist zunächst die radiale Hinterschneidungsfläche innerhalb der Kunststoff-Steckaufnahme relativ einfach allein formtechnisch herstellbar. Während des Steckfügevorgangs wird durch den formstabileren Metall-Einsteckansatz die Kunststoff-Steckaufnahme bereichsweise radial elastisch gedehnt. Die Elastizität des Kunststoffmaterials kann für eine Dehnung besser genutzt werden als für eine radiale Stauchung. In diesem Zusammenhang ist es vorteilhaft, wenn das Aufnahmeteil aus einem faserverstärkten Kunststoff besteht und dabei zumindest im Bereich der Steckaufnahme überwiegend eine axiale Faser-Ausrichtung quer zur Dehnungsrichtung des Materials vorhanden ist. Diese definierte Faserausrichtung im Rastbereich etwa 90° zur Dehnrichtung kann durch geeignete Maßnahmen während des Kunststoff-Spritzvorgangs gewährleistet werden, insbesondere durch Anordnung und Ausrichtung von Einspritzpunkten, Einspritzgeschwindigkeit und Formgebung des Werkzeugs. Geeignete Parameter können durch Simulationen ermittelt werden, beispielsweise mit einem unter dem Begriff "Füllsimulation" bekannten Verfahren für die Simulation von Kunststoff-Spritzguss-Vorgängen im Digital Prototyping.

Es ist weiterhin vorteilhaft, dass erfindungsgemäß der Einsteckansatz des Anschlussteils mit seiner Raststufe im montierten, gesteckten Zustand radial spannungsfrei in der Steckaufnahme des Aufnahmeteils angeordnet ist. Durch die mit der Raststufe des Einsteckansatzes korrespondierende Hinterschneidungsfläche in der Steckaufnahme wird eine Entlastung des Kunststoff-Aufnahmeteils erreicht, indem die während des Steckfügevorgangs auftretende Dehnung vollständig zurückgenommen wird. Dadurch wird das zuvor beschriebene Problem der Spannungsrisskorrosion vollständig vermieden. Zudem sind die beiden über die erfindungsgemäße Steckverbindung verbundenen Teile vorteilhafterweise relativ zueinander um die Steckachse frei, d. h. mit einer geringen Kraft verdrehbar. Dies ist besonders dann vorteilhaft, wenn eines der beiden Gehäuse-Teile, insbesondere das Aufnahmeteil, als Winkelstück, T-Stück oder Y-Stück oder dergleichen ausgebildet ist, denn die Verdrehbarkeit im Bereich der Steckverbindung kann zur Winkel-Drehausrichtung der Gehäuseteile genutzt werden. Dabei sind dann mit Vorteil zusätzliche Mittel zur Sicherung gegen Verdrehung vorgesehen, um nach Ausrichtung das Winkelstück in seiner ausgerichteten Winkelstellung zu arretieren. Zudem können auch Sicherungsmittel gegen axiale Relativbewegungen vorgesehen sein.

Gemäß der Erfindung weist das Aufnahmeteil einen zur Steckachse koaxialen, am freien Ende axial vorspringenden Ringkragen auf, der zur Führung gegen Verkippen relativ zur Steckachse kraftschlüssig in eine korrespondierende Ausnehmung innerhalb des Anschlussteils eingreift. Somit wird über den Ringkragen des Aufnahmeteils und eine zylindrische Innenumfangsfläche innerhalb der Ausnehmung des Anschlussteils eine Verlängerung der effektiven axialen Führungslänge der ineinander eingreifenden Teile der Steckverbindung erreicht. Vorzugsweise greift dabei der Ringkragen mit seinem freien vorderen Endbereich in eine passende Nutausnehmung im Grundbereich der Ausnehmung des Anschlussteils ein, so dass auch auf der radial inneren Seite des Ringkragens eine kraftschlüssige Führungsanlage vorhanden ist. Im Hinblick auf die beim Steckfügevorgang auftretende radiale Dehnung des Kunststoff-Aufnahmeteils ist hierbei vorgesehen, dass der Ringkragen des Aufnahmeteils an seinem freien Ende zumindest eine radial äußere Einführschrägfläche derart aufweist, dass während des Steckfügevorgangs der Ringkragen auch im Falle einer radialen Dehnung jedenfalls in die korrespondierende Ausnehmung des Anschlussteils einführbar ist. Dies bedeutet, dass radiale Überschneidungen bzw. Überdeckungen der zur Steckachse senkrechten Stirnflächen vermieden werden, indem Überschneidungen jedenfalls nur im Bereich der Einführschrägfläche liegen, so dass der Ringkragen stets sicher in die Ausnehmung eingeführt wird. Unter der Voraussetzung, dass bei einer Dehnung von etwa 5 bis 7% im Rastbereich eine Umfangsvergrößerung im freien Endbereich des Ringkragens mit einer geringeren Dehnung von weniger als 5 bis 7% vorhanden ist, ist die Einführschrägfläche derart ausgelegt, dass eine anfängliche Berührung des Ringkragens im Einführbereich der korrespondierenden Ausnehmung des Anschlussteils jedenfalls innerhalb der Einführschrägfläche erfolgt.

Sicherheitshalber ist die Einführschrägfläche so konzipiert, dass im freien Endbereich des Ringkragens eine Dehnung von 6 bis 10% auftreten kann, ohne den Steckfügevorgang zu beeinträchtigen. Während der Montage liegt der Ringkragen umfänglich in der Ausnehmung des Anschlussteils an, wodurch seine Dehnspannung von dem Anschlussteil abgestützt wird. Dadurch werden während der Montage Risse des Ringkragens sicher vermieden. Im montierten Zustand liegt der Ringkragen kraftschlüssig mit einem geringen Fügespiel, welches insbesondere als Durchmesserspiel im Bereich von 0,14 bis 0,38 mm bzw. als Radialspiel im Bereich von 0,07 bis 0,19 mm im fertig gesteckten Zustand liegt, ohne Dehnung in der Ausnehmung des Anschlussteils, wobei vorzugsweise eine mäanderförmige Kontur eine Labyrinthdichtung zur Schmutzabdichtung gegen Eindringen von Schmutz, Feuchtigkeit usw. von außen bildet.

Zur gegenseitigen umfangsgemäßen Abdichtung der beiden Teile des Gehäuseteils ist im Bereich der Steckverbindung eine elastische Umfangsdichtung vorgesehen, die vorteilhafterweise in einer zwischen einer zylindrischen Außenumfangsfläche und einer von dieser ausgehend radial nach außen vorspringenden Stufenfläche des Anschlussteils einerseits und einer zylindrischen Innenumfangsfläche und einer von dieser ausgehend radial nach innen vorspringenden Stufenfläche des Aufnahmeteils andererseits gebildeten Dichtungskammer angeordnet ist. Durch diese vorteilhafte Ausgestaltung sind beidseitig keine radialen Dichtungsnuten erforderlich. Dadurch ist eine einfache axiale Montage der Umfangsdichtung möglich, insbesondere durch Aufsetzen auf die zylindrische Außenumfangsfläche des Einsteckansatzes des Anschlussteils. Zudem kann aufgrund der fehlenden Dichtungsnut das Kunststoff-Aufnahmeteil mit seiner Steckaufnahme auf einfache Weise formtechnisch hergestellt werden, und zwar vorteilhafterweise mit axialer Entformung im Bereich der zylindrischen Innenumfangsfläche, so dass hier keine Formtrenngrate entstehen, vielmehr wird eine gratfreie, in Umfangsrichtung glatte Dichtfläche erreicht.

Anhand eines in den Zeichnungen veranschaulichten, bevorzugten Ausführungsbeispiels soll die Erfindung im Folgenden genauer erläutert werden. Dabei zeigen:

Fig. 1    einen Axialschnitt durch eine erfindungsgemäße Anschlussvorrichtung in einer Ausgestaltung als Winkelverbinder,

Fig. 2    eine Perspektivdarstellung der Anschlussvorrichtung gemäß Fig. 1 (ohne eine Sicherungsklammer nach Fig. 4),

Fig. 3    eine Seiten-Explosionsansicht der für die Erfindung wesentlichen Bestandteile derAnschlussvorrichtung gemäß Fig. 1, wobei die Bestandteile jeweils im Halb-Axialschnitt dargestellt sind,

Fig. 4    eine gesonderte Darstellung einer zusätzlichen Sicherungsklammer,

Fig. 5    eine Teilansicht entsprechend Fig. 1 und 3 in einem Zustand am Beginn des Steckfügevorgangs der Steckverbindung,

Fig. 6    einen Axialschnitt durch den Eingriffsbereich der Steckverbindung im montierten, gänzlich gefügten Zustand und

Fig. 7    eine Darstellung analog zu Fig. 5 in einem Zwischenzustand während des Steckfügevorgangs,

Fig. 8    eine verkleinerte Seitenansicht der Anschlussvorrichtung mit einem zusätzlichen Montagewerkzeug in Form eines Steckschlüssels,

Fig. 9     eine Ansicht analog zu Fig. 8 in einer Variante des Steckschlüssels,

Fig. 10    einen Querschnitt in der Ebene X-X in Fig. 8 und

Fig. 11    einen Querschnitt in der Ebene XI-XI in Fig. 9.

In den verschiedenen Figuren der Zeichnung sind gleiche Teile stets mit den gleichen Bezugszeichen versehen.

Eine erfindungsgemäße Anschlussvorrichtung 1 dient zur Anschlussverbindung einer nicht dargestellten Medienleitung, das heißt einer Rohr- oder Schlauchleitung für Strömungs- oder Druckmedien, wie Flüssigkeiten und/oder Gase, an ein beliebiges Aggregat oder an eine weitere Leitung. Die Anschlussvorrichtung 1 besteht dazu aus einem Gehäuseteil 2 mit einem Durchgangskanal 4 für das jeweilige Medium, wobei das Gehäuseteil 2 zweiteilig aus einem Aufnahmeteil 6 zum Steckanschluss der jeweiligen Medienleitung und aus einem Anschlussteil 8 zum anderendigen Anschluss des Gehäuseteils 2 besteht.

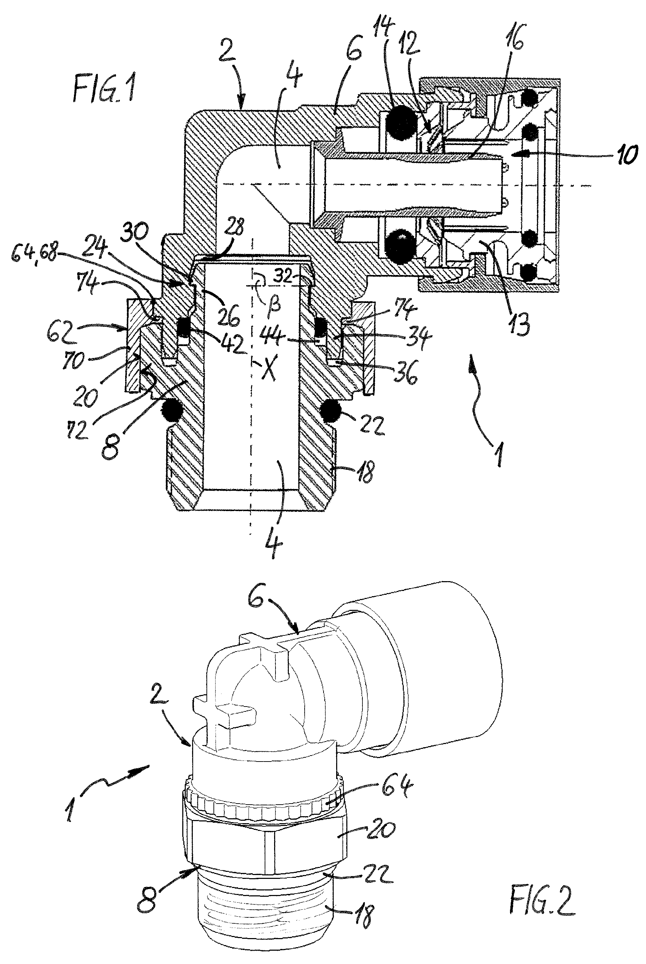

Bei dem in Fig. 1 dargestellten Ausführungsbeispiel weist das Aufnahmeteil 6 zum schnellen und bevorzugt auch lösbaren Anschluss der Medienleitung durch einfaches Einstecken eines Leitungsendes eine Aufnahmeöffnung 10 auf. Zum Arretieren des eingesteckten Leitungsendes gegen Herausziehen ist innerhalb der Aufnahmeöffnung 10 ein Halteelement 12 gelagert, welches im dargestellten Ausführungsbeispiel als federelastischer Zahnring mit mehreren über den Umfang verteilt angeordneten, sich radial nach innen und schräg in Einsteckrichtung geneigt erstreckenden und dadurch widerhakenartig kraft- und/oder formschlüssig gegen die äußere Umfangsfläche des Leitungsendes wirkenden Haltezähnen ausgebildet ist. Zum Lösen der Leitung ist ein axial verschiebbares Löseelement 13 vorgesehen, mit dem das Halteelement 12 zur Freigabe der Leitung verformt werden kann. Zur Abdichtung des eingesteckten Leitungsendes nach außen ist zudem innerhalb der Aufnahmeöffnung 10 mindestens eine Umfangsdichtung 14 gelagert. Wie weiter dargestellt ist, kann zusätzlich innerhalb der Aufnahmeöffnung 10 eine Stützhülse 16 koaxial so angeordnet sein, dass das Leitungsende beim Einstecken auf eine zylindrische Außenfläche der Stützhülse 16 aufschiebbar ist. Dadurch wird das eingesteckte Leitungsende von der Stützhülse 16 radial gegen die Haltekraft des Halteelementes 12 abgestützt. Weitere Einzelheiten zu dem Leitungsanschluss sind in der Anmeldung DE 20 2012 102 342.3 enthalten.

Das Anschlussteil 8 kann - wie beispielhaft dargestellt ist - zum Anschluss beispielsweise an ein Aggregat einen Außengewindestutzen 18 aufweisen, wobei zum Anziehen der Verschraubung ein Außensechskant 20 vorgesehen ist. Zum Abdichten des Anschlussteils 8 gegen das Aggregat ist im Übergangsbereich zwischen dem Außengewindestutzen 18 und dem Außensechskant 20 ein Dichtring 22 angeordnet.

Weiterhin ist vorgesehen, dass das Anschlussteil 8 aus Metall, insbesondere Aluminium oder auch Messing, Stahl o.a., besteht und mit dem aus Kunststoff bestehenden Aufnahmeteil 6 über eine koaxiale, rotationssymmetrische Steckverbindung 24 mit formschlüssiger Verrastung und mit einem umfangsgemäß geschlossenen Linienverlauf verbunden ist. Bei dieser Steckverbindung 24 handelt es sich somit um eine schnappbare Formschlussverbindung, wobei diese Verbindung linienhaft geschlossen und damit abstützend ist. Dadurch wird eine hohe Verbindungsfestigkeit erreicht.

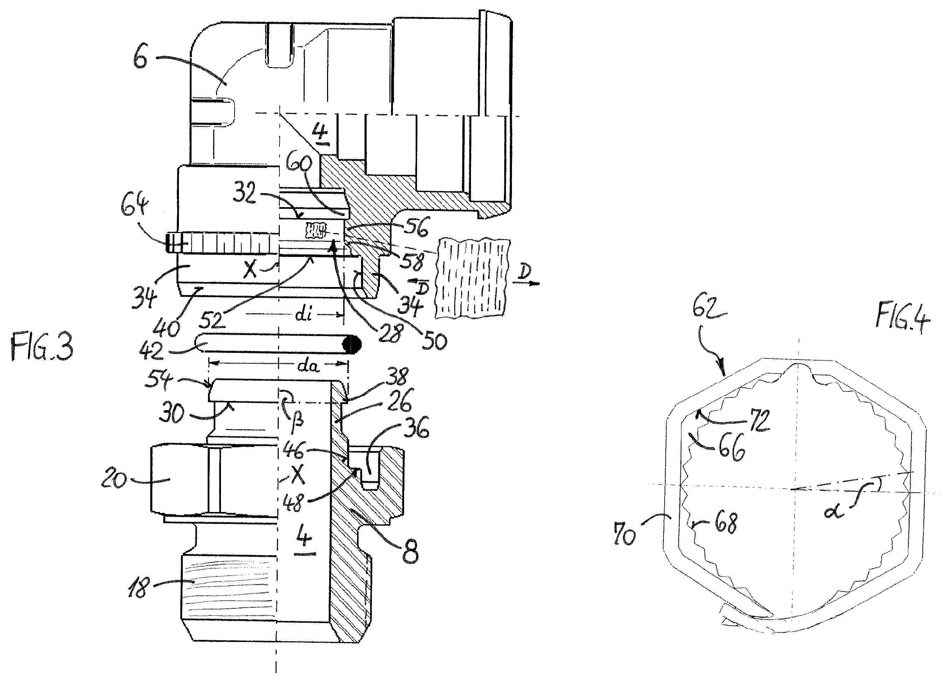

Erfindungsgemäß ist hierbei vorgesehen, dass das Anschlussteil 8 mit einem Einsteckansatz 26 in eine Steckaufnahme 28 des Aufnahmeteils 6 eingesteckt ist, wobei der Einsteckansatz 26 mit einer radial nach außen vorspringenden Raststufe 30 eine radiale Hinterschneidungsfläche 32 innerhalb der Steckaufnahme 28 formschlüssig rastend hintergreift. Dazu wird insbesondere auf Fig. 3 verwiesen. Für den Formschluss beträgt der so genannte Hinterschneidungswinkel β - siehe Fig. 1,3 und 6 - mindestens 90°, das heißt β ≥ 90°.

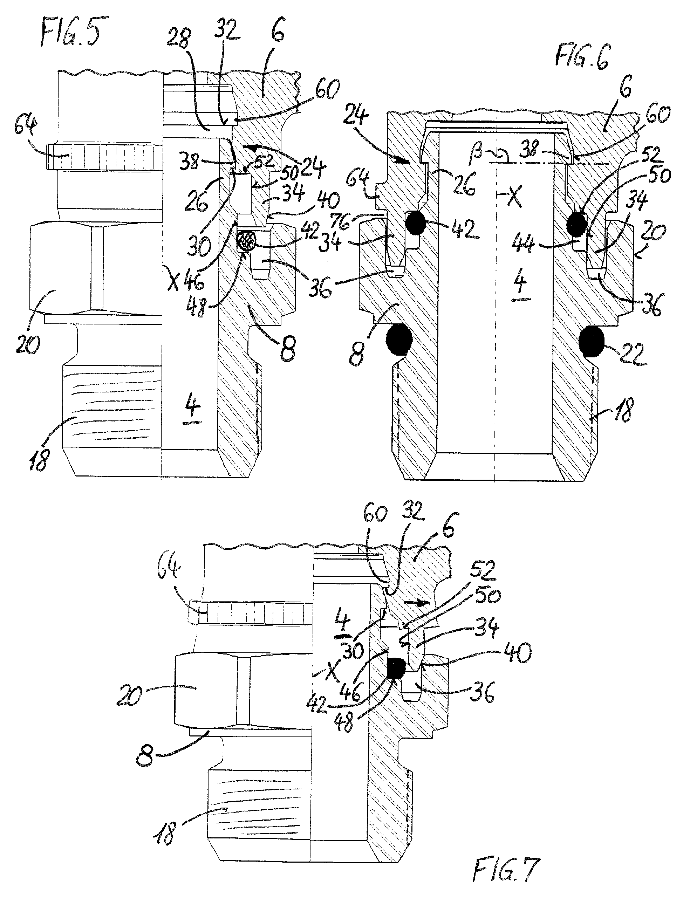

Weiterhin weist das Aufnahmeteil 6 im Anschluss an die Steckaufnahme 28 einen zu einer Steckachse X der Steckverbindung 24 koaxialen, axial vorspringenden Ringkragen 34 auf, der zur Führung kraftschlüssig in eine korrespondierende axiale Ausnehmung 36 innerhalb des Anschlussteils 8 eingreift. Die Steckverbindung 24 ist derart ausgelegt, dass während des Steckfügevorgangs - vergleiche dazu die Figuren 5 bis 7 - über einen äußeren radialen, die Raststufe 30 aufweisenden Ringsteg 38 des Einsteckansatzes 26 des Anschlussteils 8 das Aufnahmeteil 6 im inneren Bereich der Steckaufnahme 28 elastisch gedehnt wird, und zwar bevorzugt um 5 bis 7%. Dies wird durch Auslegung der Durchmesser-Verhältnisse erreicht. In Fig. 3 ist der Außendurchmesser des Ringstegs 38 mit "da" eingezeichnet, und der minimale Innendurchmesser innerhalb der Steckaufnahme 28 mit "di". Somit ergibt sich die notwendige prozentuale Durchmesser-Dehnung aus

$$\text{Ed} = \frac{da - di}{di}.$$ Die durch die jeweiligen Durchmesser-Verhältnisse konzipierte Dehnung liegt dabei jedenfalls unterhalb der Bruchdehnung des verwendeten Kunststoffmaterials.

Der Ringkragen 34 des Aufnahmeteils 6 weist an seinem freien Ende zumindest eine radial äußere Einführschrägfläche 40 derart auf, dass während des Steckfügevorgangs (Fig. 5 bis 7) auch im Falle einer radialen Dehnung jedenfalls der Ringkragen 34 in die korrespondierende Ausnehmung 36 des Anschlussteils 8 einführbar ist. In Fig. 7 ist die Dehnungsverformung allerdings zur Verdeutlichung etwas übertrieben dargestellt.

Bevorzugt besteht das Aufnahmeteil 6 aus einem faserverstärkten Kunststoff. Wie dazu in Fig. 3 durch eine zusätzliche Ausschnittvergrößerung und eine Strichelung angedeutet ist, ist zumindest im Bereich der Steckaufnahme 28 eine axiale, das heißt zur Steckachse X parallele Faser-Ausrichtung vorhanden. Somit sind die im Material eingebetteten, gestrichelt angedeuteten Fasern quer zur Dehnungsrichtung (Pfeile D) ausgerichtet, was die elastische Dehnbarkeit begünstigt.

Wie sich weiter aus Fig. 1 und 6 ergibt, ist ein im montierten Zustand zwischen dem Einsteckansatz 26 des Anschlussteils 8 und der Steckaufnahme 28 des Aufnahmeteils 6 vorhandener Ringspalt über eine elastische Umfangsdichtung 42 nach außen abgedichtet. Diese Umfangsdichtung 42 ist in einer Dichtungskammer 44 angeordnet, die vorteilhafterweise zwischen einer zylindrischen Außenumfangsfläche 46 und einer von dieser ausgehend radial nach außen vorspringenden Stufenfläche 48 des Anschlussteils 8 einerseits sowie einer zylindrischen Innenumfangsfläche 50 und einer von dieser ausgehend radial nach innen vorspringenden Stufenfläche 52 des Aufnahmeteils 6 andererseits gebildet ist.

Die zylindrische Innenumfangsfläche 50 liegt bevorzugt im Bereich des Ringkragens 34, das heißt der Ringkragen 34 bildet innenseitig die Innenumfangsfläche 50. Durch diese vorteilhafte Ausgestaltung ergibt sich eine konstruktiv einfache Dichtungsanordnung, was die Herstellung und Montage vereinfacht. Zudem kann die Innenumfangsfläche 50 axial und dadurch ohne Formgrat entformt werden, so dass sie als glatte Dichtfläche eine gute Abdichtung durch umfangsgemäße Anlage der Umfangsdichtung 42 gewährleistet.

Es ist weiterhin vorteilhaft, wenn der Einsteckansatz 26 des Anschlussteils 8 an dem die Raststufe 30 aufweisenden Ringsteg 38 eine endseitige, äußere, fasenartige, der Raststufe 30 vorgeordnete Einführschräge 54 aufweist (siehe Fig. 3).

Weiterhin ist innerhalb der Steckaufnahme 28 des Aufnahmeteils 6 zur Bildung des kleinsten Durchmessers di eine Verengung 56 vorgesehen, die einseitig in die Hinterschneidungsfläche 32 übergeht, und die anderseitig eine vorgeordnete Einführschräge 58 aufweist.

Wie insbesondere anhand der Darstellung in Fig. 6 nachvollziehbar ist, ist der Einsteckansatz 26 des Anschlussteils 8 insbesondere im Bereich des Ringstegs 38 und der Raststufe 30 im montierten, gesteckten Zustand radial spannungsfrei in der Steckaufnahme 28 des Aufnahmeteils 6 angeordnet. Dabei sitzt der Ringsteg 38 mit äußerem Radialspiel innerhalb einer inneren, die Hinterschneidungsfläche 32 bildenden Entspannungsnut 60 der Steckaufnahme 28.

Gemäß Fig. 1 und 3 ist weiterhin bevorzugt vorgesehen, dass mindestens eines der Teile 6, 8 des Gehäuseteils 2, und zwar wie dargestellt insbesondere das Aufnahmeteil 6, als Winkelstück ausgebildet ist. Indem das Aufnahmeteil 6 relativ zu dem Anschlussteil 8 um die Steckachse X verdrehbar ist, kann eine Einstellung der Winkelausrichtung des Aufnahmeteils 6 relativ zu dem Anschlussteil 8 vorgenommen werden. Mit Vorteil sind hierbei zusätzliche Mittel zur Sicherung der Teile 6, 8 gegen relative Verdrehungen um die Steckachse X in einer bestimmten Winkeldrehausrichtung sowie vorzugsweise gegen relative Axialbewegungen im montierten Zustand vorgesehen. Gemäß Fig. 1 und 4 kann als Mittel zur Sicherung ein im Wesentlichen ringförmiges Klammerelement 62 außen auf einen Übergangsbereich zwischen dem Anschlussteil 8 und dem Aufnahmeteil 6 montiert oder montierbar sein. Das Klammerelement 62 greift einerseits formschlüssig in eine äußere Verzahnung 64 - siehe insbesondere Fig. 2, 3 und 5 - des Aufnahmeteils 6 ein und übergreift andererseits den Außensechskant 20 des Anschlussteils 8 formschlüssig. Gemäß Fig. 4 kann das Klammerelement 62 an einer Umfangsstelle geöffnet und geschlossen werden, um es im geöffneten Zustand unter federelastischer Verformung montieren und demontieren zu können. Zum Eingriff in die äußere Verzahnung 64 weist das Klammerelement 62 gemäß Fig. 4 einen inneren Steg 66 mit einer korrespondierenden Gegenverzahnung 68 auf. Zum formschlüssigen Übergreifen des Außensechskantes 20 des Anschlussteils 8 weist das Klammerelement 62 einen Abschnitt 70 mit einem korrespondierenden Innensechskant 72 auf. Gemäß Fig. 4 kann die Verzahnung 64, 68 mit einer Winkelteilung $\alpha$ von beispielsweise 10° ausgebildet sein, so dass eine stufige Winkelausrichtung in Schritten von jeweils 10° möglich ist. Zusätzlich kann das Klammerelement 62 gemäß Fig. 1 mit mindestens einem radialen Sicherungsabschnitt 74 in einen axial zwischen dem Aufnahmeteil 6 und dem Anschlussteil 8 gebildeten Umfangsspalt 76 (siehe dazu Fig. 6) eingreifen, um die Teile 6, 8 gegen axiale Spielbewegungen zu blockieren.

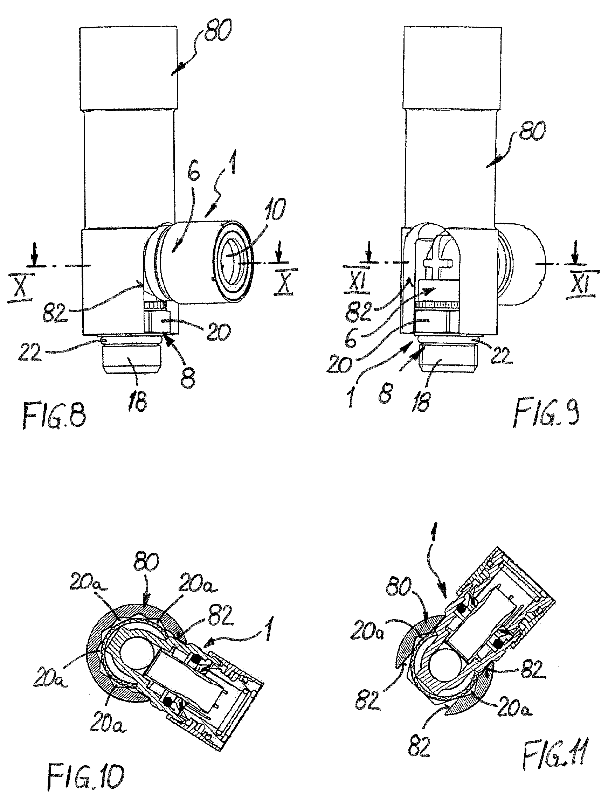

Durch die zuvor beschriebene erfindungsgemäße Ausgestaltung der Verbindung zwischen dem Aufnahmeteil 6 und dem Anschlussteil 8 wird eine vorteilhaft kurze axiale Baulänge bzw. Bauhöhe ermöglicht. Wie dazu beispielhaft in den Fig. 8 bis 11 veranschaulicht ist, kann durch die geringe Bauhöhe - in einer Ausführung der Anschlussvorrichtung 1 als Winkel- oder T-Stück - zur Montage, d. h. zum Verschrauben des Anschlussteils 8, ein Steckschlüssel 80 verwendet werden, der axial auf den Außensechskant 20 des Anschlussteils 8 aufgesetzt werden kann, indem er mindestens eine seitliche, endseitig randoffene Ausnehmung 82 aufweist, die über den winkligen Abgang des Aufnahmeteils 6 hinweg aufsetzbar ist. Gemäß Fig. 9 und 11 weist der Steckschlüssel 80 für eine Montage mit einem als T-Stück (nicht dargestellt) ausgebildeten Aufnahmeteil 6 zwei diametral gegenüberliegende Ausnehmungen 82 auf. Hierbei weist das Aufnahmeteil 6 im Aufsatzbereich für die bzw. jede Ausnehmung 82 des Steckschlüssels 80 vorzugsweise eine äußere Durchmesserverjüngung derart auf, dass die bzw. jede Ausnehmung 82 des Steckschlüssels 80 so schmal sein kann, dass bei einem Winkelstück - siehe dazu Fig. 8 und 10 - jedenfalls noch stets wenigstens vier der sechs Ecken 20a des Sechskantes 20 sicher in dem nur eine Ausnehmung 82 aufweisenden Steckschlüssel 80 aufgenommen werden bzw. bei Auslegung für ein T-Stück - siehe Fig. 9 und 11 - wegen der dazu erforderlichen zwei Ausnehmungen 82 mindestens zwei diametral gegenüberliegende Ecken 20a.

Die Erfindung ist nicht auf die dargestellten und beschriebenen Ausführungsbeispiele beschränkt, sondern umfasst auch alle im Sinne der Erfindung gleichwirkenden Ausführungen.

**Patentansprüche**

1. Anschlussvorrichtung (1) für Medienleitungen, bestehend aus einem Gehäuseteil (2), welches zweiteilig aus einem Aufnahmeteil (6) zum Steckanschluss einer Medienleitung und aus einem Anschlussteil (8) zum Anschluss des Gehäuseteils (2) an ein Aggregat oder eine weitere Medienleitung besteht, wobei das Anschlussteil (8) aus Metall besteht und mit dem aus Kunststoff bestehenden Aufnahmeteil (6) über eine koaxiale, rotationssymmetrische Steckverbindung (24) mit formschlüssiger Verrastung und mit umfangsgemäß geschlossenem Linienverlauf verbunden ist, wobei das Anschlussteil (8) mit einem Einsteckansatz (26) in eine Steckaufnahme (28) des Aufnahmeteils (6) eingesteckt ist, wobei der Einsteckansatz (26) mit einer radial nach außen vorspringenden Raststufe (30) eine radiale Hinterschneidungsfläche (32) innerhalb der Steckaufnahme (28) formschlüssig hintergreift, **dadurch gekennzeichnet, dass** das Aufnahmeteil (6) einen zu einer Steckachse (X) der Steckverbindung (24) koaxialen, axial vorspringenden Ringkragen (34) aufweist, der zur Führung kraftschlüssig in eine korrespondierende Ausnehmung (36) innerhalb des Anschlussteils (8) eingreift.

2. Anschlussvorrichtung nach Anspruch 1, **dadurch gekennzeichnet, dass** die Steckverbindung (24) derart ausgelegt ist, dass während des Steckfügevorgangs über einen äußeren radialen, die Raststufe (30) aufweisenden Ringsteg (38) des Einsteckansatzes (26) des Anschlussteils (8) das Aufnahmeteil (6) im inneren Bereich der Steckaufnahme (28) elastisch um eine notwendige prozentuale Durchmesserdehnung $E_d$ mit $E_d = \frac{d_a - d_i}{d_i}$

   mit $d_a$ als Außendurchmesser des Ringstegs (38) und $d_i$ als minimaler Innendurchmesser der Steckaufnahme (28) gedehnt wird, und zwar bevorzugt unterhalb der Bruchdehnung des verwendeten Kunststoffmaterials, insbesondere um 5 bis 7%.

3. Anschlussvorrichtung nach Anspruch 2, **dadurch gekennzeichnet, dass** der Ringkragen (34) des Aufnahmeteils (6) an seinem freien Ende zumindest eine radial äußere Einführschrägfläche (40) derart aufweist, dass während des Steckfügevorgangs der Ringkragen (34) des radial gedehnten Aufnahmeteils (6) in die korrespondierende Ausnehmung (36) des Anschlussteils (8) einführbar ist.

4. Anschlussvorrichtung nach einem der Ansprüche 1 bis 3, **dadurch gekennzeichnet, dass** ein Ringspalt zwischen dem Einsteckansatz (26) des Anschlussteils (8) und der Steckaufnahme (28) des Aufnahmeteils (6) über eine elastische Umfangsdichtung (42) nach außen abgedichtet ist.

5. Anschlussvorrichtung nach Anspruch 4, **dadurch gekennzeichnet, dass** die Umfangsdichtung (42) in einer zwischen einer zylindrischen Außenumfangsfläche (46) und einer von dieser ausgehend radial nach außen vorspringenden Stufenfläche (48) des Anschlussteils (8) einerseits und einer zylindrischen Innenumfangsfläche (50) und einer von dieser ausgehend radial nach innen vorspringenden Stufenfläche (52) des Aufnahmeteils (6) andererseits gebildeten Dichtungskammer (44) angeordnet ist.

6. Anschlussvorrichtung nach einem der Ansprüche 1 bis 5, **dadurch gekennzeichnet, dass** der Einsteckansatz (26) des Anschlussteils (8) eine endseitige, äußere, fasenartige, der Raststufe (30) vorgeordnete Einführschräge (54) aufweist.

7. Anschlussvorrichtung nach einem der Ansprüche 1 bis 6, **dadurch gekennzeichnet, dass** innerhalb der Steckaufnahme (28) des Aufnahmeteils (6) eine Verengung (56) gebildet ist, die einseitig in die Hinterschneidungsfläche (32) übergeht, und die anderseitig eine vorgeordnete Einführschräge (58) aufweist.

8. Anschlussvorrichtung nach einem der Ansprüche 1 bis 7, **dadurch gekennzeichnet, dass** das Aufnahmeteil (6) aus einem faserverstärkten Kunststoff besteht, wobei zumindest im Bereich der Steckaufnahme (28) eine axiale Faser-Ausrichtung quer zur Dehnungsrichtung vorhanden ist.

9. Anschlussvorrichtung nach einem der Ansprüche 1 bis 8, **dadurch gekennzeichnet, dass** der Einsteckansatz (26) des Anschlussteils (8) im montierten Zustand radial spannungsfrei in der Steckaufnahme (28) des Aufnahmeteils (6) angeordnet ist.

10. Anschlussvorrichtung nach einem der Ansprüche 1 bis 9, **dadurch gekennzeichnet, dass** zumindest eines der Teile (6, 8) des Gehäuseteils (2), insbesondere das Aufnahmeteil (6), als Winkelstück ausgebildet ist, wobei das Aufnahmeteil (6) relativ zu dem Anschlussteil (8) um die Steckachse (X) verdrehbar ist.

**11.** Anschlussvorrichtung nach Anspruch 10, **gekennzeichnet durch** Mittel zur Sicherung der Teile (6, 8) des Gehäuseteils (2) gegen relative Verdrehungen um die Steckachse (X) in einer bestimmten Winkeldrehausrichtung des Winkelstücks und/oder gegen relative Axialbewegungen im montierten Zustand.

**12.** Anschlussvorrichtung nach Anspruch 11, **dadurch gekennzeichnet, dass** als Mittel zur Verdreh-Sicherung ein Klammerelement (62) außen auf einen Übergangsbereich zwischen dem Anschlussteil (8) und dem Aufnahmeteil (6) montiert oder montierbar ist, wobei das Klammerelement (62) einerseits formschlüssig in eine äußere Verzahnung (64) des Aufnahmeteils (6) eingreift und andererseits einen Außensechskant (20) des Anschlussteils (8) formschlüssig übergreift.

**13.** Anschlussvorrichtung nach Anspruch 12, **dadurch gekennzeichnet, dass** das Klammerelement (62) mit mindestens einem radialen Sicherungsabschnitt (74) in einen axial zwischen dem Aufnahmeteil (6) und dem Anschlussteil (8) gebildeten Umfangsspalt (76) eingreift.

**Claims**

1. Connecting device (1) for media lines, comprising a housing part (2) which, in two parts, comprises an accommodating part (6), for the plug-in connection of a media line, and a connecting part (8), for the connection of the housing part (2) to a subassembly or to a further media line, wherein the connecting part (8) consists of metal and is connected to the accommodating part (6), which consists of plastics material, via a coaxial, rotationally symmetrical plug-in connection (24) with form-fitting latching and with a circumferentially closed linear progression, wherein the connecting part (8) is plugged into a plug-in mount (28) of the accommodating part (6) by way of a plug-in extension (26), wherein the plug-in extension (26) engages in a form-fitting manner behind a radial undercut surface (32) within the plug-in mount (28) by way of a radially outwardly projecting latching step (30), **characterized in that** the accommodating part (6) has an axially projecting annular collar (34) which is coaxial with a plug-in axis (X) of the plug-in connection (24) and, for guidance purposes, engages in a force-fitting manner in a corresponding recess (36) within the connecting part (8).

2. Connecting device according to Claim 1, **characterized in that** the plug-in connection (24) is configured such that, during the plug-in joining operation, an outer radial annular crosspiece (38) of the plug-in extension (26) of the connecting part (8), said annular crosspiece having the latching step (30), expands the accommodating part (6) elastically in the inner region of the plug-in mount (28) by a necessary amount of percentage diameter expansion $E_d$,

where $E_d = \frac{d_a - d_i}{d_i}$, $d_a$ being the external diameter of the annular crosspiece (38) and $d_i$ being the minimum internal diameter of the plug-in mount (28), to be precise preferably below the elongation at break of the plastics material used, in particular by 5 to 7%.

3. Connecting device according to Claim 2, **characterized in that** the annular collar (34) of the accommodating part (6) has at its free end at least one radially outer sloping introduction surface (40) such that, during the plug-in joining operation, the annular collar (34) of the radially expanded accommodating part (6) can be introduced into the corresponding recess (36) of the connecting part (8).

4. Connecting device according to one of Claims 1 to 3, **characterized in that** an annular gap between the plug-in extension (26) of the connecting part (8) and the plug-in mount (28) of the accommodating part (6) is sealed in the outward direction via an elastic circumferential seal (42).

5. Connecting device according to Claim 4, **characterized in that** the circumferential seal (42) is arranged in a sealing chamber (44) formed between, on the one hand, a cylindrical outer circumferential surface (46) and a step surface (48) of the connecting part (8), said step surface projecting radially outwardly from said outer circumferential surface, and, on the other hand, a cylindrical inner circumferential surface (50) and a step surface (52) of the accommodating part (6), said step surface projecting radially inwardly from said inner circumferential surface.

6. Connecting device according to one of Claims 1 to 5, **characterized in that** the plug-in extension (26) of the connecting part (8) has an end-side, outer, chamfer-like introduction slope (54) arranged upstream of the latching step (30).

7. Connecting device according to one of Claims 1 to 6, **characterized in that** the plug-in mount (28) of the accommodating part (6) has formed within it a narrowed portion (56) which, on one side, merges into the undercut surface (32) and, on the other side, has an upstream introduction slope (58).

8. Connecting device according to one of Claims 1 to 7, **characterized in that** the accommodating part (6) consists of a fiber-reinforced plastics material, wherein an axial fiber orientation transverse to the direction of expansion is present at least in the region of the plug-in mount (28).

9. Connecting device according to one of Claims 1 to 8, **characterized in that**, in the installed state, the plug-in extension (26) of the connecting part (8) is arranged in a radially stress-free manner in the plug-in mount (28) of the accommodating part (6).

10. Connecting device according to one of Claims 1 to 9, **characterized in that** at least one of the parts (6, 8) of the housing part (2), in particular the accommodating part (6), is designed in the form of an angular component, wherein the accommodating part (6) can be rotated about the plug-in axis (X) relative to the connecting part (8).

11. Connecting device according to Claim 10, **characterized by** means for securing the parts (6, 8) of the housing part (2) against relative rotation about the plug-in axis (X) in a certain angular rotary orientation of the angular component and/or against relative axial movement in the installed state.

12. Connecting device according to Claim 11, **characterized in that**, as rotation-prevention means, a clamp element (62) is, or can be, installed on the outside of a transition region between the connecting part (8) and the accommodating part (6), wherein the clamp element (62), on the one hand, engages in a form-fitting manner in an outer toothing formation (64) of the accommodating part (6) and, on the other hand, engages in a form-fitting manner over a hexagonal protuberance (20) of the connecting part (8).

13. Connecting device according to Claim 12, **characterized in that** the clamp element (62) engages, by way of at least one radial securing portion (74), into a circumferential gap (76) formed axially between the accommodating part (6) and the connecting part (8).

**Revendications**

1. Dispositif de raccordement (1) pour conduites de fluide, constitué d'une partie de boîtier (2) qui se compose en deux parties d'une partie de réception (6) pour un raccord par enfichage d'une conduite de fluide et d'une partie de raccordement (8) pour le raccord de la partie de boîtier (2) à une unité ou une autre conduite de fluide, la partie de raccordement (8) se composant de métal et étant connectée à la partie de réception (6) se composant de plastique par le biais d'une connexion par enfichage coaxiale à symétrie de révolution (24) avec un encliquetage par engagement par correspondance de formes et avec une allure linéaire fermée sur la périphérie, la partie de raccordement (8) étant enfichée avec une pièce d'enfichage (26) dans un logement d'enfichage (28) de la partie de réception (6), la pièce d'enfichage (26) venant en prise par l'arrière par engagement par correspondance de formes par le biais d'un gradin d'encliquetage saillant radialement vers l'extérieur (30) avec une surface radiale en contre-dépouille (32) à l'intérieur du logement d'enfichage (28), **caractérisé en ce que** la partie de réception (6) présente un col annulaire (34) saillant axialement, coaxial à un axe d'enfichage (X) de la connexion par enfichage (24), qui vient en prise pour le guidage par engagement par force dans un évidement correspondant (36) à l'intérieur de la partie de raccordement (8).

2. Dispositif de raccordement selon la revendication 1, **caractérisé en ce que** la connexion par enfichage (24) est conçue de telle sorte que pendant l'opération d'assemblage par enfichage, la partie de réception (6), par le biais d'une nervure annulaire (38) extérieure radiale de la pièce d'enfichage (26) de la partie de raccordement (8), présentant le gradin d'encliquetage (30) dans la région interne du logement d'enfichage (28), soit étirée élastiquement d'un pourcentage d'étirement de diamètre nécessaire $E_d$, avec $E_d = (d_a - d_i)/d_i$, $d_a$ étant le diamètre extérieur de la nervure annulaire (38) et $d_i$ étant le diamètre intérieur minimal du logement d'enfichage (28), et ce de préférence en dessous de l'étirement à la rupture du matériau en plastique utilisé, en particulier de 5 à 7 %.

3. Dispositif de raccordement selon la revendication 2, **caractérisé en ce que** le col annulaire (34) de la partie de réception (6) présente, au niveau de son extrémité libre, au moins une surface de biseau d'insertion radialement extérieure (40), de telle sorte que pendant l'opération d'assemblage par enfichage, le col annulaire (34) de la partie de réception étirée radialement (6) puisse être inséré dans l'évidement correspondant (36) de la partie de raccordement (8).

4. Dispositif de raccordement selon l'une quelconque des revendications 1 à 3, **caractérisé en ce qu'**une fente annulaire entre la pièce d'enfichage (26) de la partie de raccordement (8) et le logement d'enfichage (28) de la partie de réception (6) est étanchéifiée vers l'extérieur par le biais d'un joint d'étanchéité périphérique élastique (42).

5. Dispositif de raccordement selon la revendication 4, **caractérisé en ce que** le joint d'étanchéité périphérique (42) est disposé dans une chambre d'étanchéité (44) formée entre une surface périphérique extérieure cylindrique (46) et une surface étagée (48) de la partie de raccordement (8) faisant saillie radialement vers l'extérieur depuis celle-ci d'une part, et une surface périphérique intérieure cylindrique (50) et une surface étagée (52) de la partie de réception (6) faisant saillie radialement vers l'intérieur depuis celle-ci d'autre part.

6. Dispositif de raccordement selon l'une quelconque des revendications 1 à 5, **caractérisé en ce que** la pièce d'enfichage (26) de la partie de raccordement (8) présente un biseau d'insertion extérieur (54) du côté de l'extrémité, en forme de chanfrein, monté avant le gradin d'encliquetage (30).

7. Dispositif de raccordement selon l'une quelconque des revendications 1 à 6, **caractérisé en ce qu'**à l'intérieur du logement d'enfichage (28) de la partie de réception (6) est formé un rétrécissement (56) qui se prolonge d'un côté dans la surface en contre-dépouille (32) et qui présente de l'autre côté un biseau d'insertion (58) monté avant lui.

8. Dispositif de raccordement selon l'une quelconque des revendications 1 à 7, **caractérisé en ce que** la partie de réception (6) se compose d'un plastique renforcé par des fibres, une orientation axiale des fibres transversalement à la direction d'étirement étant prévue au moins dans la région du logement d'enfichage (28).

9. Dispositif de raccordement selon l'une quelconque des revendications 1 à 8, **caractérisé en ce que** la pièce d'enfichage (26) de la partie de raccordement (8) est disposée, dans l'état monté, radialement sans contraintes dans le logement d'enfichage (28) de la partie de réception (6).

10. Dispositif de raccordement selon l'une quelconque des revendications 1 à 9, **caractérisé en ce qu'**au moins l'une des parties (6, 8) de la partie de boîtier (2), en particulier la partie de réception (6), est réalisée sous forme de pièce en coin, la partie de réception (6) pouvant tourner par rapport à la partie de raccordement (8) autour de l'axe d'enfichage (X).

11. Dispositif de raccordement selon la revendication 10, **caractérisé par** des moyens de fixation des parties (6, 8) de la partie de boîtier (2) contre des rotations relatives autour de l'axe d'enfichage (X) dans une orientation de rotation angulaire déterminée de la pièce en coin et/ou contre des mouvements axiaux relatifs dans l'état monté.

12. Dispositif de raccordement selon la revendication 11, **caractérisé en ce qu'**en tant que moyen de fixation contre la rotation, un élément de pince (62) est monté ou peut être monté à l'extérieur sur une région de transition entre la partie de raccordement (8) et la partie de réception (6), l'élément de pince (62) venant en prise d'une part par engagement par correspondance de formes dans une denture extérieure (64) de la partie de réception (6) et venant en prise d'autre part par le dessus par engagement par correspondance de formes avec un profilé à six pans extérieur (20) de la partie de raccordement (8).

13. Dispositif de raccordement selon la revendication 12, **caractérisé en ce que** l'élément de pince (62) vient en prise avec au moins une portion de fixation radiale (74) dans une fente périphérique (76) formée axialement entre la partie de réception (6) et la partie de raccordement (8).

FIG.1

FIG.2

FIG.4

FIG.3

11

FIG.5

FIG.6

FIG.7

FIG.8

FIG.9

FIG.10

FIG.11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4305609 A1
- EP 1697675 B1
- WO 2009040489 A1
- DE 102005027816 B4
- DE 202012102342